# EUROPÄISCHE PATENTSCHRIFT

(11) **EP 3 043 101 B1**
(45) Veröffentlichungstag und Bekanntmachung des Hinweises auf die Patenterteilung: **13.11.2019**
(21) Anmeldenummer: 16150113.5
(22) Anmeldetag: 05.01.2016
(51) Int. Cl.: F16L 25/00

(54) **DICHTUNGSMUFFE**
SEALING SLEEVE
MANCHON D'ETANCHEITE

(30) Priorität: 08.01.2015 CH 232015
(43) Veröffentlichungstag der Anmeldung: 13.07.2016
(73) Patentinhaber: Morach, Christoph, 8335 Hittnau (CH)
(72) Erfinder: Morach, Christoph, 8335 Hittnau (CH)
(74) Vertreter: Frei Patent Attorneys

(56) Entgegenhaltungen:
- EP-A1- 0 465 896
- EP-A2- 2 161 486
- US-A1- 2014 197 632

## Beschreibung

Die Erfindung bezieht sich auf das Gebiet der Verbindung von Rohren, insbesondere von gerippten Rohren. Sie bezieht sich auf eine Dichtungsmuffe und die Herstellung einer Dichtungsmuffe gemäss dem Oberbegriff der entsprechenden unabhängigen Patentansprüche.

Elektro- und Datenkabel werden vorwiegend durch erdverlegte Rohre gezogen. Um zwei Rohre nahtlos zusammenzuführen werden Muffen eingesetzt. Zum Teil werden die Kabel mit Druckluft eingeblasen. Das bedingt, dass die Rohre auch an den Stossstellen dicht seien sollten. Ebenfalls ist es ein Wunsch, dass kein Wasser, Sand oder andere Partikel in die Rohre eindringen können. Zum Teil werden die Rohrverbindungen durch das Anlegen von einem Luftstrom auf ihre Dichtheit geprüft. In Lüftungsanlagen werden ähnlich geartete flexible Kunststoffrohre eingesetzt, die natürlich auch luftdicht miteinander verbunden werden sollen.

Die verwendeten Rohre sind an der Aussenseite glatt oder gerippt und weisen Durchmesser von 8 cm bis 20 cm oder mehr auf. Zum Verbinden solcher Rohre untereinander oder zum Anschluss an Verteilkästen werden Verbindungsmuffen oder Anschlussmuffen eingesetzt. Um eine zumindest annähernd luftdichte Verbindung zwischen Muffe und Rohr zu erzielen, wird beispielsweise ein O-Ring an der Innenseite einer Muffe angeordnet. Beim Einstecken eines Rohres in eine Muffe wird das Rohr zuerst durch den O-Ring hindurch gepresst. Anschliessend kann das Rohr, falls es gerippt ist, in einer innerhalb des Rohres angeordneten Raste einrasten.

Bei anderen Muffen muss der O-Ring über das glatte oder gerippte Rohr gestülpt werden und dann zusammen mit dem Rohr in die Muffe eingeführt werden. In der Regel sind bei den bekannten Muffen die Verbindungskräfte relativ hoch, wobei das Rohr von Beginn an mit grossem Kraftaufwand in die Muffe geschoben werden muss. Die O-Ringe können verrutschen und damit nicht mehr korrekt dichten. Die Lage des Rohres in der Muffe nach dem Einschieben ist nicht klar definiert, nicht bekannt, und kann nicht überprüft werden.

US 5584512 zeigt ein Verbindungssystem für Rohrleitungen und andere ölführenden Anwendungen, welches es ermöglicht, dass die von innen beschichtet oder ausgekleideten Rohre frei von thermischen und mechanischen Belastungen sind und so die Beschichtung oder Auskleidung nicht beschädigt wird. Ein männliches Element mit einem Innenfutter und ein weibliches Element, in das das männliche Element eingebracht werden soll, weisen jeweils innere Umfangsrillen auf, in die ein Sprengring zum Verbinden eingebracht wird. Die Umfangsrillen der Rohrleitung müssen dabei passgenau an die Umfangsrillen des Verbindungssystems angepasst sein, damit eine Dichtung zwischen zwei Rohrleitungen sicher abdichten kann.

EP 2161486 zeigt eine Rohrmuffe zum Anschluss an ein an der Aussenseite glattes oder geripptes Rohr mit einer Öffnung zum Einstecken eines Rohres. Die Rohrmuffe weist eine Dichtung zum Herstellen einer im Wesentlichen luftdicht abgedichteten Verbindung zwischen der Rohrmuffe und einem eingestecktem Rohr auf. Der Mantel der Rohrmuffe ist beispielsweise einstückig ausgebildet, so dass die Dichtung in den Mantel eingepresst werden muss, wodurch es zu einer Deformation der Dichtung und damit zu einem ungenügenden Abdichten kommen kann.

EP 2161486 zeigt in anderen Ausführungsbeispielen mehrteilige Rohrmuffen, wobei der Mantel beispielsweise zwei Halbschalen aufweist, die axial an einer Mantelhülse mit Dichtung angeordnet sind. Durch die Mehrteiligkeit der Rohrmuffen kann die Stabilität insbesondere unter Torsionskräften beeinflusst sein.

EP 456 896 A1 zeigt ein Verbindungselement zum Anschliessen von Wellrohren und Schläuchen an ein Anschlussstück in Gestalt eines Gewindes. Eine federelastische Dichtung ist im Verbindungselement eingesetzt und wird durch eine Schiebemuffe gehalten. Verriegelungskrallen der Schiebemuffe dienen sowohl zum Halten der Schiebemuffe bezüglich des Verbindungselementes als auch zum Halten eines eingeschobenen Wellrohres. Diese Doppelfunktion der Verriegelungskralle hat zur Folge, dass die Verriegelungskralle, falls sie nicht korrekt und vollständig in das Verbindungselement einrastet, zu weit nach innen vorsteht und das Wellrohr beim Einschieben daran hängen bleibt und blockiert wird.

Es ist deshalb Aufgabe der Erfindung, eine Dichtungsmuffe der eingangs genannten Art zu schaffen, welche die oben genannten Nachteile behebt. Weitere Aufgaben für mindestens einige Ausführungsformen sind es, eine Dichtungsmuffe zu schaffen,
- die robust ist;
- wenige Einzelteile aufweist, so dass die Rohrmuffe auch ohne Schulung und Vorkenntnisse fachgerecht zusammengesetzt werden kann;
- bei welcher die Nacharbeitung der Einzelteile reduziert werden kann;
- die schnell und funktionssicher montiert werden kann; und/oder
- mit welcher Installationsrohre sicher zusammengehalten werden.

Diese Aufgaben bzw. einen Teil dieser Aufgaben lösen eine Dichtungsmuffe mit den Merkmalen des Patentanspruches 1 sowie ein Satz von Elementen zur Herstellung einer Dichtungsmuffe mit den Merkmalen des Patentanspruches 11 sowie ein Verfahren zur Herstellung einer Dichtungsmuffe mit den Merkmalen des entsprechenden unabhängigen Patentanspruches 12.

Die Dichtungsmuffe zum abdichtenden Verbinden mit mindestens einem Installationsrohr weist ein Hülsenelement mit einem Rohrbereich und einem Hülsenbereich auf, wobei der Hülsenbereich einen Dichtungsbereich und einen Einsatzbereich aufweist. Die Dichtungsmuffe weist ausserdem eine elastische Dichtung zum Herstellen einer abgedichteten Verbindung mit mindestens einem Installationsrohr auf, wobei die Dichtung im Dichtungsbereich des Hülsenelements anordenbar ist. Des Weiteren weist die Dichtungsmuffe einen Einsatz mit mindestens einem ersten Verbindungselement zum Einrasten des Einsatzes mit dem Hülsenelement und mit mindestens einer Halteraste zum Halten eines Installationsrohrs auf, wobei der Einsatz in den Einsatzbereich des Hülsenelements einsetzbar ist. Dabei ist der Dichtungsbereich zwischen dem Rohrbereich und dem Einsatzbereich angeordnet und das Hülsenelement weist im Einsatzbereich mindestens ein zweites Verbindungselement auf, mit welchem das mindestens eine erste Verbindungselement des Einsatzes einrastbar ist.

Dadurch wird es möglich, dass das Hülsenelement den Einsatz mindestens teilweise umschliesst und so die Stabilität der gesamten Dichtungsmuffe gesteigert werden kann. Das erste und zweite Verbindungselement sind so zueinander korrespondierend ausgestaltet, dass sie ineinander eingreifen können und so eine sicheres Einrasten des Einsatzes am Hülsenelement gewährleisten.

In einer Ausführungsform der Dichtungsmuffe kann das mindestens eine erste Verbindungselement als Einrastelement und das mindestens eine zweite Verbindungselement als Einrastöffnung ausgestaltet sein. Das Einrastelement kann in die Einrastöffnung eingreifen und so den Einsatz im Hülsenelement fixieren.

In einer alternativen Ausführungsform kann das das mindestens eine erste Verbindungselement als Einrastöffnung und das mindestens eine zweite Verbindungselement als Einrastelement ausgestaltet sein. Das Einrastelement des Hülsenelements kann in die Einrastöffnung des Einsatzes eingreifen und einrasten, wobei der Einsatz im Hülsenelement fixiert werden kann.

Des Weiteren wird es möglich, dass der Einsatz aus dem Hülsenelement über die Einrastöffnung von aussen lösbar ist, da sich die Einrastöffnung von der Innenseite des Hülsenelements zur Aussenseite des Hülsenelements erstreckt. Die dreiteilige Ausgestaltung der Dichtungsmuffe (Hülsenelement, Dichtung, Einsatz) ermöglicht eine einfache Produktion der Einzelteile, wobei die Nachbearbeitung der Einzelteile reduziert werden kann. Ferner ist die Herstellung, dass heisst das Zusammensetzen, der Dichtungsmuffe aus den Einzelteilen einfach und kann ohne Schulung oder Vorkenntnisse durchgeführt werden.

Ein Installationsrohr kann in einem Arbeitsgang, durch eine einzige Bewegung, d.h. durch das Einschieben in beispielsweise den Einsatz bis zum Anschlag an der Dichtung, abdichtend fixiert werden, d.h. durch die Halteraste sicher gehalten werden.

Indem die Dichtung (in Bewegungsrichtung des eingeführten Installationsrohrs gesehen) erst nach der Halteraste angeordnet ist, können Installationsrohre mit kleinem Kraftaufwand in die Dichtungsmuffe eingeführt werden. Erst gegen den Schluss des Montagevorgangs, wenn das Rohr im Bereich der Dichtung liegt, steigt die Kraft an. Die Dichtung wird dabei vorzugsweise über mehrere Rippen hergestellt, die an der Dichtung anliegen.

Vorzugsweise liegt die Dichtung am Ende eines eingesteckten Installationsrohrs an. Damit ist es möglich, das Installationsrohr gegen die Dichtung zu stossen und eine Abdichtung zu erzielen, aber ohne dass das Rohr an der Dichtung vorbei geschoben werden muss.

Allgemein gilt, dass für eine Dichtungsmuffe, welche zum Anschluss an einen Installationskasten, beispielsweise einen Verteilkasten, ausgebildet ist, im Wesentlichen der Rohrbereich des Hülsenelements in den Verteilkasten übergeht, ohne das ein Installationsrohr am Rohrbereich installiert wird.

Das Hülsenelement kann im Rohrbereich eine Halteraste zum Halten eines Installationsrohrs aufweisen. Dadurch wird es möglich dass je ein Installationsrohr an je mindestens einer Halteraste am Einsatz beziehungsweise am Hülsenelement gehalten werden kann.

Die Dichtung kann einen Rohranschlag aufweisen, wodurch die axiale Positionierung eines Installationsrohres begrenzt und vorbestimmt werden kann. Dadurch kann verhindert werden, dass ein Installationsrohr gänzlich durch die Dichtungsmuffe durchgestossen wird.

Der Rohranschlag kann einstückig mit der Dichtung ausgebildet sein, wodurch einem Verschieben des Rohranschlags relativ zur Dichtung entgegengewirkt werden kann.

Die Dichtung kann einen Innenkonus aufweisen. Der Innenkonus kann flach, mit einer nur geringen Neigung ansteigt respektive sich verengt ausgebildet sein. Der Innenkonus kann am Ende eines eingesteckten Installationsrohrs anliegen und so eine abdichtende Wirkung erzielen. Der Innenkonus kann an seiner offenen Seite mit der Innenwand des Hülsenelements im Dichtungsbereich fluchten. Das eingesteckte Installationsrohr wird so durch das Hülsenelement in den Innenkonus geführt.

Die elastische Dichtung kann in radialer Richtung komprimierbar sein. Dadurch wird das Einschieben der Dichtung in den Dichtungsbereich vereinfacht.

Der Innendurchmesser des Rohrbereichs kann mit dem Aussendurchmesser eines eines zu haltenden Installationsrohrs korrespondieren. Das heisst, dass der Innendurchmesser des Rohrbereichs an den Aussendurchmesser des Installationsrohrs angepasst sein kann. Dadurch kann ein Installationsrohr reibungsfrei und leichtgängig in den Rohrbereich eingeschoben werden und beispielsweise einen Gleitsitz oder Schiebesitz bilden und anschliessen am Haltelement gehalten werden.

Die zu verbindenden Installationsrohre und damit auch erfindungsgemässen Dichtungsmuffen können rund, oval, rechteckig oder anders geformt sein. Dementsprechend ist der Durchmesser durch die Kontur des Installationsrohrs sinngemäss zu ersetzen. Das heisst beispielsweise im Fall einer rechteckigen Dichtungsmuffe mit rechteckigem Installationsrohr, dass die Innenkontur des Rohrbereichs an die Aussenkontur des Installationsrohrs angepasst ist und mit ihr korrespondiert. Korrespondierend bedeutet in diesem Zusammenhang, dass ein Gleitsitz oder Schiebesitz gebildet werden kann, wobei die Aussenkontur des Installationsrohrs im Wesentlichen der Innenkontur des Rohrbereichs folgt. Dies kann für verschiedene Konturen von Installationsrohr und Dichtungsmuffe der Fall sein, beispielsweise runde, quadratische, eckige oder andere beliebige Konturen.

Des Weiteren kann ein Innendurchmesser des Hülsenbereichs zum Aussendurchmesser der Dichtung korrespondieren. Auf diese Weise kann die Dichtung passgenau in den Dichtungsbereich eingesetzt werden, ohne eine Deformation der Dichtung zu provozieren, da eine solche Deformation die Dichtungswirkung negativ beeinflussen könnte.

Ein Innendurchmesser des Dichtungsbereichs kann zum Aussendurchmesser des Einsatzes korrespondieren. Dadurch kann die Dichtung durch den Einsatzbereich hindurch in den Dichtungsbereich eingesetzt werden ohne die Dichtung zu verformen.

Das Hülsenelement kann im Einsatzbereich mindestens eine Halteöffnung aufweisen. Die Halteöffnung erstreckt sich von der Innenseite bis zur Aussenseite des Hülsenelements. Die Halteöffnung ist so positioniert, dass im eingerasteten Zustand des Einsatzes im Hülsenelement die Halteraste über die Halteöffnung zugänglich ist. Auf diese Weise wird es möglich, dass ein gehaltenes Installationsrohr wieder gelöst werden kann, da mit Hilfe der Halteöffnung der Zugang zur Halteraste am Einsatz gewährt wird.

In weiteren Ausführungsbeispielen ist es möglich, dass die Halteöffnung weiter bzw. näher zum Dichtungsbereich hin angeordnet ist als die Einrastöffnung zum Einrasten des Einsatzes. Da ein zu haltendes Installationsrohr an der Einrastöffnung vorbei mindestens bis zur Halteöffnung und daher zur entsprechend angeordneten Halteraste in die Dichtungsmuffe eingeschoben werden muss, kann ein eingeschobenes und gehaltenes Installationsrohr das Lösen des Einsatzes aus dem Hülsenelement blockieren. Auf diese Weise wird die Verbindung zwischen Hülsenelement und Einsatz zusätzlich gesichert.

In einer weiteren Ausfiihrungsform ist die Rohrmuffe zum Verbinden zweier koaxialer Rohre gleichen Durchmessers ausgebildet, und die Dichtung ist für die beiden Rohre einstückig gebildet.

An der Innenseite des Hülsenbereiches im Dichtungsbereich kann mindestens eine Halterippe angeordnet sein, welche mindestens gegen eine nach aussen vorstehende Dichtungsrippe an der Dichtung angreift und eine Verschiebung der Dichtung in axialer Richtung begrenzt. Dadurch wird einer Fehlpositionierung der Dichtung im Dichtungsbereich vorgebeugt und somit kann die Montage einfach durchgeführt werden.

Ein Satz von Elementen zur Herstellung einer Dichtungsmuffe weist ein Hülsenelement mit einem Rohrbereich und einem Hülsenbereich auf, wobei der Hülsenbereich einen Dichtungsbereich und einen Einsatzbereich aufweist. Der Satz weist ausserdem eine elastische Dichtung zum Herstellen einer abgedichteten Verbindung mit mindestens einem Installationsrohr auf, wobei die Dichtung im Dichtungsbereich des Hülsenelements anordenbar ist. Des Weiteren weist der Satz einen Einsatz mit mindestens einem Einrastelement zum Einrasten des Einsatzes in das Hülsenelement und mit mindestens einer Halteraste zum Halten eines Installationsrohrs auf, wobei der Einsatz in den Einsatzbereich des Hülsenelements einsetzbar ist. Dabei ist der Dichtungsbereich zwischen dem Rohrbereich und dem Einsatzbereich angeordnet und das Hülsenelement weist im Einsatzbereich mindestens eine Einrastöffnung auf, in welche mindestens eines der Einrastelemente des Einsatzes einrastbar ist. Das Hülsenelement weist im Einsatzbereich mindestens eine, von der Einrastelemente verschiedene Halteöffnung auf, wobei die Halteöffnung so dimensioniert und positionierbar ist, dass im eingerasteten Zustand des Einsatzes im Hülsenelement die Halteraste über die Halteöffnung zugänglich ist.

In weiteren Aufführungsformen der Erfindung ist es möglich, dass im zusammengesetzten Zustand der Dichtungsmuffe der Einsatz mit der Dichtung in Berührung kommt. Auf diese Weise wird es möglich, dass die Position der Dichtung in der Dichtungsmuffe fixiert werden kann.

Es können an der Aussenseite der Dichtungsmuffe Markierungen angeordnet sein, welche eine Einstecktiefe anzeigen, bis zu welcher ein Installationsrohr in die Dichtungsmuffe einzuschieben ist. Diese Einstecktiefe kann erforderlich sein, um eine korrekte und insbesondere dichte Verbindung mit der Dichtungsmuffe zu erzielen.

Ein Verfahren zur Herstellung einer Dichtungsmuffe weist die folgenden Schritte auf:
- Bereitstellen einer eingangs beschriebenen Dichtungsmuffe;
- Einsetzen der Dichtung in den Hülsenbereich des Hülsenelement, wobei die Dichtung durch den Einsatzbereich hindurch in den Dichtungsbereich eingesetzt wird;
- Einsetzen des Einsatzes in den Einsatzbereich des Hülsenbereiches, wobei das mindestens eine Einrastelement in der mindestens einen Einrastöffnung am Hülsenelement einrastet.

Auf diese Weise wird es möglich in die zusammengesetzte Dichtungsmuffe ein Installationsrohr einzuschieben so dass dieses mit mindestens einer Halteraste in der Dichtungsmuffe gehalten wird.

Vorzugsweise weist die Muffe genau ein Rastelement pro eingestecktes Rohr auf. Damit kann die Rastverbindung mit nur zwei Händen und gegebenenfalls einem einfachen Werkzeug wie einem Schraubenzieher gelöst werden.

Die zu verbindenden Rohre und damit auch erfindungsgemässe Dichtungsmuffen können einen rund, oval, rechteckig oder anderen Querschnitt aufweisen.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im Folgenden wird der Erfindungsgegenstand anhand von Ausführungsbeispielen, welche in den beiliegenden Zeichnungen dargestellt sind, näher erläutert. Sie zeigen jeweils schematisch:
- Figur 1: eine Explosionszeichnung der Dichtungsmuffe mit zwei Installationsrohren;
- Figur 2: eine Ansicht einer Dichtungsmuffe im zusammengesetzten Zustand mit zwei gehaltenen Installationsrohren;
- Figur 3a: einen Querschnitt durch eine zusammengesetzte Dichtungsmuffe wie in Figur 2 gezeigt;
- Figur 3b: einen vergrösserten Ausschnitt aus Figur 3a;
- Figur 4a: einen Querschnitt durch eine zusammengesetzte Dichtungsmuffe wie in Figur 2 gezeigt, wobei der Querschnitt orthogonal zum Schnitt aus Figur 3 verläuft;
- Figur 4b: einen vergrösserten Ausschnitt aus Figur 4a;
- Figur 4c: einen weiteren vergrösserten Ausschnitt aus Figur 4a;
- Figur 5: eine Ansicht eines Hülsenelements; und
- Figur 6: einen Querschnitt einer Dichtungsmuffe im zusammengesetzten Zustand.

Grundsätzlich sind in den Figuren gleiche oder analoge Teile mit gleichen Bezugszeichen versehen.

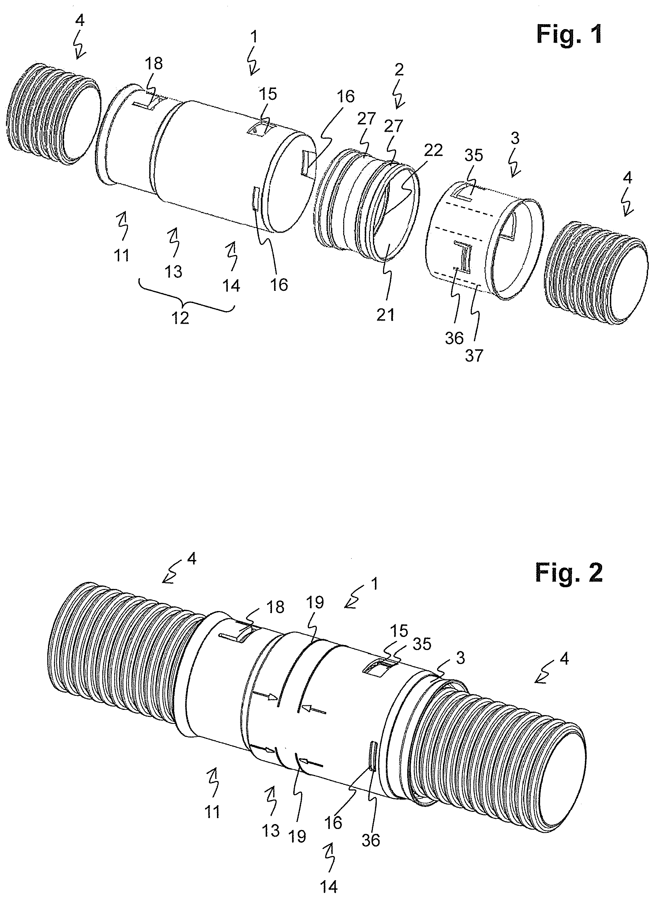

Die Figuren 1 bis 4c zeigen eine Dichtungsmuffe in verschiedenen Ansichten, ohne und mit eingesetzten Installationsrohren 4. **Figur 1** zeigt eine Explosionszeichnung der Dichtungsmuffe mit zwei Installationsrohren 4. Die Dichtungsmuffe weist ein Hülsenelement 1 mit einem Rohrbereich 11 und einem Hülsenbereich 12 auf, wobei der Hülsenbereich 12 einen Dichtungsbereich 13 und einen Einsatzbereich 14 aufweist. Des Weiteren weist die Dichtungsmuffe eine elastische Dichtung 2 zum Herstellen einer abgedichteten Verbindung mit mindestens einem Installationsrohr 4 auf, wobei die Dichtung 2 in den Dichtungsbereich 13 des Hülsenelements 1 einsetzbar ist. Der Dichtungsbereich 13 ist zwischen dem Rohrbereich 11 und dem Einsatzbereich 14 angeordnet, dadurch wird die Dichtung 2 durch den Einsatzbereich 14 hindurch in den Dichtungsbereich 13 eingesetzt. Das heisst, dass die Dichtung 2 zunächst den Einsatzbereich 14 passieren muss um im Dichtungsbereich 13 angeordnet zu werden. Ausserdem weist die Dichtungsmuffe einen Einsatz 3 mit mindestens einem Einrastelement 36 zum Einrasten des Einsatzes 3 in das Hülsenelement 1 und mit mindestens einer Halteraste 35 zum Halten eines Installationsrohrs 4 auf, wobei der Einsatz 3 in den Einsatzbereich 14 des Hülsenelements 1 einsetzbar ist. Das Hülsenelement 1 weist im Einsatzbereich 14 mindestens eine Einrastöffnung 16 auf, in welche eines der mindestens einen Einrastelemente 36 des Einsatzes einrastbar ist.

Das Hülsenelement 1 weist zusätzlich zur Einrastöffnung 16, in welcher der Einsatz 3 im zusammengesteckten Zustand eingerastet ist, eine Halteöffnung 15 im Einsatzbereich 14 auf. Die Halteöffnung 15 ist in Bezug auf die Einrastöffnung 16 axial in Richtung zum Dichtungsbereich 13 hin versetzt angeordnet. Des Weiteren weist das Hülsenelement 1 im Rohrbereich 11 eine Halteraste 18 auf, wobei die Halteraste 18 ein Installationsrohr 4 in der Dichtungsmuffe halten kann.

Die elastische Dichtung 2 weist einen Rohranschlag 22 auf, wobei der Rohranschlag 22 zur Begrenzung des Einführens eines Installationsrohrs 4 dient. Auf diese Weise kann verhindert werden, dass ein Installationsrohr 4 durch den Dichtungsbereich 13 hindurch bis beispielsweise in den Rohrbereich 11 bzw. den Einsatzbereich 14 des Hülsenelements 1 geschoben werden kann. Die dichtende Wirkung der Dichtungsmuffe kann dadurch erhöht werden, dass ein Installationsrohr 4 gegen den Rohranschlag 22 gepresst wird. Die Dichtung 2 weist des weiteren nach aussen vorstehende Dichtungsrippen 27 auf, welche die Position der Dichtung 2 im Hülsenelement 1 stabilisieren können. Auf diese Weise kann die Position der Dichtung 2 auch bei einem Einschieben eines Installationsrohrs 4 gehalten werden. Die Dichtung 2 ist so ausgestaltet, dass sie eine Innenkonus 21 aufweist. Das heisst, dass ein Innenradius der Dichtung 2 nach innen hin (zur Mitte der Dichtung 2 in axialer Richtung hin) kleiner ausgestaltet ist als am äusseren Rand der Dichtung 2. Der Innenradius im Bereich dieses Innenkonus 21 ist über einen grösseren Bereich entlang des Innenkonus 21 enger als der Aussenradius eines einzusteckenden Installationsrohrs 4, so dass ein eingestecktes Installationsrohr 4 gegen den Innenkonus 21 abgedichtet wird.

Die Dichtung 2 kann mindestens im Bereich des Innenkonus 21 und auf dessen Innenseite poliert sein, um eine Gleitfähigkeit zu erhöhen und damit ein Einführen des Installationsrohrs 4 zu erleichtern. Zusätzlich oder alternativ kann zum Erhöhen der Gleitfähigkeit das Material der Dichtung Silikon enthalten.

Der Einsatz 3 mit zwei Halterasten 35 kann mit Hilfe von zwei Einrastelementen 36 in den Einrastöffnungen 16 des Hülsenelements 1 eingerastet werden, wobei die beiden Halterasten 35 dazu ausgebildet sind, ein Installationsrohr 4 in der Dichtungsmuffe zu halten.

Die Halteraste 18/35 ist als federndes Plättchen mit einem ins Muffeninnere gerichteten Haltefortsatz ausgestaltet, wobei der Haltefortsatz in einer Rille eines gewellten Installationsrohrs 4 eingreifen kann und so das Installationsrohr 4 in der Dichtungsmuffe gehalten wird.

An der Aussenseite des Einsatzes 3 können vorstehende Rippen 37 angeordnet sein, welche den Einsatz 3 im eingesetzten Zustand vom Hülsenelement beabstanden. Damit kann erreicht werden, dass der Einsatz 3 dünner, also mit weniger Material herstellbar ist und gleichwohl der Innerdurchmesser von Einsatz 3 und Dichtung 2 beim Übergang vom Einsatz 3 zur Dichtung 2 derselbe ist.

**Figur 2** zeigt eine Ansicht einer Dichtungsmuffe im zusammengesetzten Zustand mit zwei gehaltenen Installationsrohren 4. Die Halteraste 18 im Rohrbereich 11 hält ein Installationsrohr 4 in der Dichtungsmuffe. Der in den Einsatzbereich 14 eingesetzte Einsatz 3 ist mit dem Einrastelement 36 in die Einrastöffnung 16 des Hülsenelements 1 eingerastet. Die Halteraste 35 des Einsatzes 3 hält ein weiteres Installationsrohr 4 in der Dichtungsmuffe, dabei ist die Halteraste 35 über die Halteöffnung 15 des Hülsenelements 1 zugänglich, wodurch das Installationsrohr 4 wieder von der Dichtungsmuffe mit Hilfe eines Werkzeugs gelöst werden könnte. Das Einrastelement 36 ist durch das eingesteckte Installationsrohr 4 gesichert, wodurch der Einsatz 3 nicht aus dem Hülsenelement 1 gelöst werden kann, solang ein Installationsrohr 4 in der Dichtungsmuffe im Einsatzbereich 14 gehalten wird.

Das Hülsenelement weist Markierungen 19 auf (nur in der **Figur 2** beispielhaft gezeigt, in den anderen Figuren weggelassen). Diese Markierungen 19 zeigen die Tiefe an, bis zu welcher ein Installationsrohr 4 in die Dichtungsmuffe eingeschoben werden muss, um eine korrekte und insbesondere dichte Verbindung mit der Dichtungsmuffe zu erzielen. Die Markierungen sind beispielsweise Rillen oder Vorsprünge. Sie können entlang des Umfangs des Hülsenelementes abschnittsweise oder ganz um das Hülsenelement umlaufen. Mit ergänzenden Markierungen, beispielsweise Pfeilsymbolen, kann angezeigt werden, auf welches der beiden Enden der Dichtungsmuffe sich die Markierungen jeweils beziehen. Die Markierungen 19 werden wie folgt genutzt: Die zusammengesetzte Dichtungsmuffe 1 und ein einzusteckendes Installationsrohr 4 werden nebeneinander und parallel gehalten, so dass das Ende des Installationsrohrs 4 bei der entsprechenden Markierung 19 liegt. Beim entsprechenden Ende der Dichtungsmuffe wird eine Rohrmarkierung am Installationsrohr 4 angebracht. Anschliessend wird das Installationsrohr 4 bis zu dieser Rohrmarkierung in die Dichtungsmuffe eingesteckt. Die Rohrmarkierung kann eine farbliche Markierung oder eine Markierungshilfe sein, beispielsweise ein um das Rohr gelegtes elastisches Band oder eine Klammer. Wenn die Rohrmarkierung am Installationsrohr 4 verbleibt, kann sie auch später noch zur Kontrolle der korrekten Verbindung zwischen Installationsrohr 4 und Dichtungsmuffe verwendet werden.

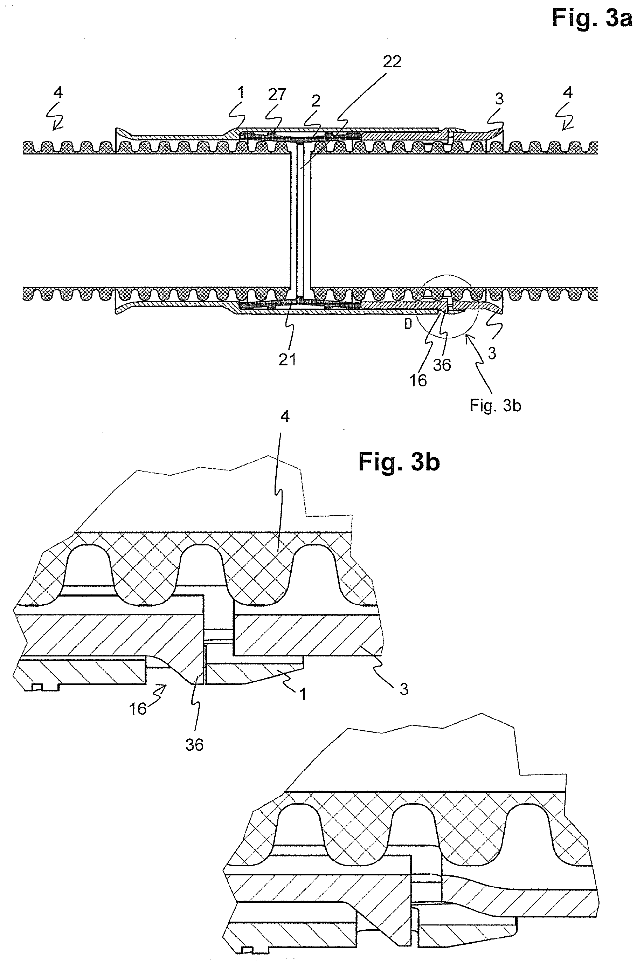

**Figur 3a** zeigt einen Querschnitt durch eine zusammengesetzte Dichtungsmuffe wie in Figur 2 gezeigt. Die beiden gehaltenen Installationsrohre 4 stossen am Innenkonus 21 der Dichtung an, wodurch die Abdichtung der Dichtungsmuffe gewährleistet werden kann. Die Dichtung 2 ist im Dichtungsbereich 13 und der Einsatz 3 ist im Einsatzbereich 14 angeordnet. Der Einsatz 3 drückt die Dichtung 2 in das Hülsenelement 1 hinein oder liegt an der Dichtung 2 an. Wie in **Figur 3b** vergrössert gezeigt, ist das Einrastelement 36 in die Einrastöffnung 16 eingerastet, wodurch der Einsatz 3 im Hülsenelement 1 eingerastet ist. Das Einrastelement 36 weist einen kleinen Fortsatz auf, der in die Einrastöffnung 16 eingreifen kann. Das eingesteckte Installationsrohr 4 verhindert, dass der Fortsatz des Einrastelementes 36 aus der Einrastöffnung 16 gelöst werden kann.

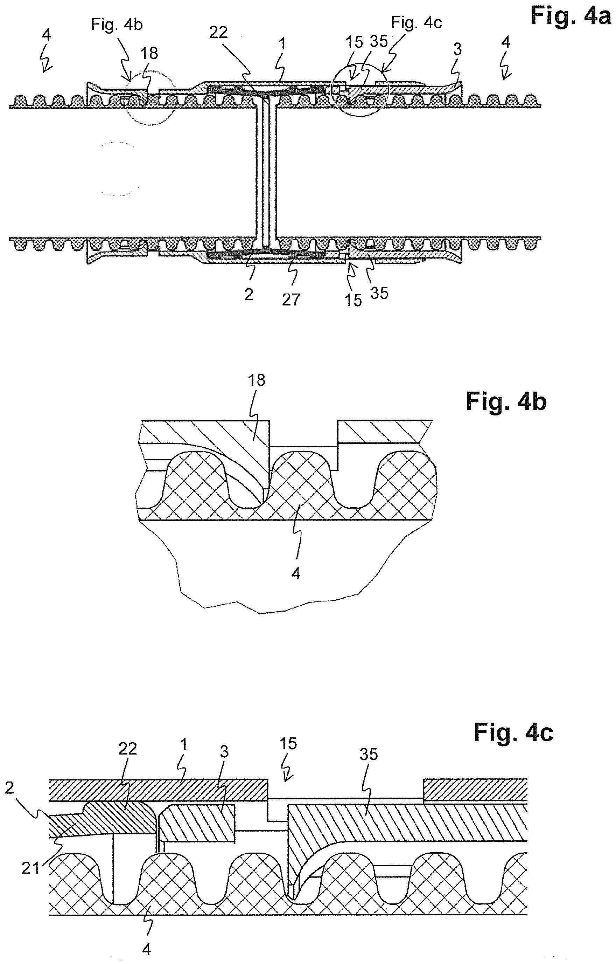

**Figur 4a** zeigt einen Querschnitt durch eine zusammengesetzte Dichtungsmuffe wie in Figur 2 gezeigt, wobei der Querschnitt orthogonal zum Schnitt aus Figur 3 verläuft. Wie in **Figur 4b** vergrössert gezeigt, weist die Halteraste 18 eine Fortsatz auf, der in die Rillen eines Installationsrohrs 4 eingreifen kann. Dadurch kann ein Installationsrohr 4 im Rohrbereich 11 des Hülsenelements 1 gehalten werden. In **Figur 4c** ist die vergrösserte Ansicht der Halteöffnung 15. Die Halteraste 35 mit einem Fortsatz zum Halten eines Installationsrohrs 4 ist unter der Einrastöffnung 16 angeordnet. Auf diese Weise kann mit einem Werkzeug, beispielsweise mit einem Schraubenzieher, die Halteraste 35 in Richtung der Halteöffnung 15 gebogen werden und das gehaltene Installationsrohr 4 kann aus dem Einsatzbereich 14 gelöst werden.

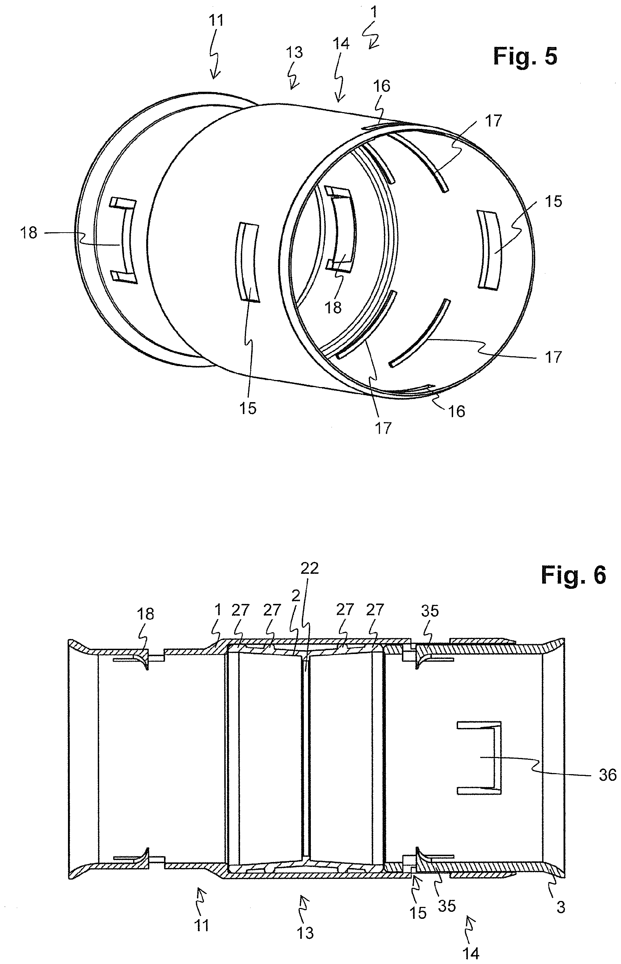

**Figur 5** zeigt eine perspektivische Ansicht des Hülsenelements 1. Die beiden Halterasten 18 im Rohrbereich 11 sind einander gegenüberliegend angeordnet. Das Hülsenelement 1 weist im Dichtungsbereich 13 eine Mehrzahl von Halterippen 17 auf. Die Halterippen 17 können an den Dichtungsrippen 27 anliegen und so die Position der Dichtung 2 im Hülsenelement 1 fixieren. Das Hülsenelement 1 weist zwei gegenüberliegende Halteöffnungen 15 und zwei einander gegenüberliegende Einrastöffnungen 16 im Einsatzbereich 14 auf. Die Halteöffnungen 15 sind dabei relativ zu den Einrastöffnungen 16 axial in Richtung des Dichtungsbereichs 13 verschoben.

**Figur 6** zeigt einen Querschnitt einer Dichtungsmuffe im zusammengesetzten Zustand. Der Fortsatz an der Halteraste 18 ragt in den Innenraum des Hülsenelements 1 hinein, so dass beim Einschieben eines Installationsrohrs 4 das Installationsrohr 4 im Rohrbereich 11 gehalten werden kann. Im Dichtungsbereich 13 ist die Dichtung 2 angeordnet, wobei die Dichtungsrippen 27 an der Innenwand des Hülsenelements 1 anliegen. Der Innendurchmesser des Hülsenbereichs 12 ist leicht grösser als der Innendurchmesser des Rohrbereichs 11, wodurch eine Schulter beim Übergang von Rohrbereich 11 zum Hülsenbereich 12 entsteht. An dieser Schulter liegt die Dichtung 2 an, so dass die Dichtung beim Einschieben eines Installationsrohrs 4 nicht in den Rohrbereich 11 verschoben wird. Die Dichtung 2 wird zusätzlich mit Hilfe von Halterippen 17 (nicht gezeigt) und Dichtungsrippen 27 im Dichtungsbereich 13 gehalten. Der Einsatz 3 ist mit den Einrastelementen 36 in den Einrastöffnungen 16 eingerastet, so dass der Einsatz 3 fest im Einsatzbereich 14 des Hülsenelements 1 sitzt. Die Halterasten 35 des Einsatzes 3 ragen wie die Halterasten 18 des Hülsenelements 1 in den Innenraum des fest sitzenden Einsatzes 3 hinein, so dass beim Einschieben eines Installationsrohrs 4 das Installationsrohr 4 im Einsatzbereich 14 gehalten werden kann.

## Patentansprüche

1. **Dichtungsmuffe** zum abdichtenden Verbinden mit mindestens einem Installationsrohr (4), aufweisend:
- ein Hülsenelement (1) mit einem Rohrbereich (11) und einem Hülsenbereich (12), wobei der Hülsenbereich (12) einen Dichtungsbereich (13) und einen Einsatzbereich (14) aufweist,
- eine elastische Dichtung (2) zum Herstellen einer abgedichteten Verbindung mit mindestens einem Installationsrohr (4), wobei die Dichtung (2) in den Dichtungsbereich (13) des Hülsenelements (1) einsetzbar ist, und
- einen Einsatz (3) mit mindestens einem ersten Verbindungselement (36) zum Einrasten des Einsatzes (3) in das Hülsenelement (1) und mit mindestens einer Halteraste (35) zum Halten eines Installationsrohrs (4), wobei der Einsatz (3) in den Einsatzbereich (14) des Hülsenelements (1) einsetzbar ist
wobei der Dichtungsbereich (13) zwischen dem Rohrbereich (11) und dem Einsatzbereich (14) angeordnet ist,
wobei das Hülsenelement (1) im Einsatzbereich (14) mindestens ein zweites Verbindungselement (16) aufweist, in welches mindestens ein erstes Verbindungselement (36) des Einsatzes einrastbar ist, und
wobei das Hülsenelement (1) im Einsatzbereich (14) mindestens eine, von dem mindestens einem zweitem Verbindungselement (16) verschiedene Halteöffnung (15) aufweist, wobei die Halteöffnung (15) so dimensioniert und positionierbar ist, dass die Halteraste (35) über die Halteöffnung (15) zugänglich ist.

2. Dichtungsmuffe gemäss Anspruch 1, wobei das mindestens eine erste Verbindungselement (36) am Einsatz als Einrastelement und das mindestens eine zweite Verbindungselement (16) als Einrastöffnung ausgebildet ist.

3. Dichtungsmuffe gemäss einem der Ansprüche 1-2, wobei das Hülsenelement (1) im Rohrbereich (11) mindestens eine Halteraste (18) zum Halten eines Installationsrohrs (4) aufweist.

4. Dichtungsmuffe gemäss einem der Ansprüche 1-3, wobei die Dichtung (2) einen Rohranschlag (22) aufweist.

5. Dichtungsmuffe gemäss einem der Ansprüche 1-4, wobei die Dichtung (2) einen Innenkonus (21) aufweist.

6. Dichtungsmuffe gemäss einem der Ansprüche 1-5, wobei ein Innendurchmesser des Hülsenbereichs (12) zum Aussendurchmesser der Dichtung (2) korrespondiert.

7. Dichtungsmuffe gemäss einem der Ansprüche 1-6, wobei ein Innendurchmesser des Dichtungsbereichs (13) zum Aussendurchmesser des Einsatzes (3) korrespondiert.

8. Dichtungsmuffe gemäss einem der Ansprüch 1-7, wobei die mindestens eine Halteöffnung (15) näher zum Dichtungsbereich (13) hin angeordnet ist als die mindestens eine Einrastöffnung (16) zum Einrasten des Einsatzes (3).

9. Dichtungsmuffe gemäss einem der Ansprüche 1-8, wobei an der Innenseite des Hülsenbereiches im Dichtungsbereich (13) mindestens eine Halterippe (17) angeordnet ist, welche mindestens gegen eine nach aussen vorstehende Dichtungsrippe (27) an der Dichtung (2) angreift und eine Verschiebung der Dichtung (2) in axialer Richtung begrenzt.

10. Dichtungsmuffe gemäss einem der Ansprüche 1-9, wobei an der Aussenseite der Dichtungsmuffe Markierungen (19) angeordnet sind, welche eine Einstecktiefe anzeigen, bis zu welcher ein Installationsrohr (4) in die Dichtungsmuffe einzuschieben ist.

11. Satz von Elementen zur Herstellung einer Dichtungsmuffe, wobei der Satz die folgenden Elemente aufweist:
- ein Hülsenelement (1) mit einem Rohrbereich (11) und einem Hülsenbereich (12), wobei der Hülsenbereich (12) einen Dichtungsbereich (13) und einen Einsatzbereich (14) aufweist,
- eine elastische Dichtung (2) zum Herstellen einer abgedichteten Verbindung mit mindestens einem Installationsrohr (4), wobei die Dichtung (2) in den Dichtungsbereich (13) des Hülsenelements (1) einsetzbar ist, und
- einen Einsatz (3) mit mindestens einem Einrastelement (36) zum Einrasten des Einsatzes (3) in das Hülsenelement (1) und mit mindestens einer Halteraste (35) zum Halten eines Installationsrohrs (4), wobei der Einsatz (3) in den Einsatzbereich (14) des Hülsenelements (1) einsetzbar ist,
wobei der Dichtungsbereich (13) zwischen dem Rohrbereich (11) und dem Einsatzbereich (14) angeordnet ist,
wobei das Hülsenelement (1) im Einsatzbereich (14) mindestens eine Einrastöffnung (16) aufweist, in welche eines der mindestens einen Einrastelemente (36) des Einsatzes einrastbar ist, und
wobei das Hülsenelement (1) im Einsatzbereich (14) mindestens eine, von der Einrastelemente (16) verschiedene Halteöffnung (15) aufweist, wobei die Halteöffnung (15) so dimensioniert und positionierbar ist, dass im eingerasteten Zustand des Einsatzes im Hülsenelement die Halteraste (35) über die Halteöffnung (15) zugänglich ist.

12. **Verfahren** zur Herstellung einer Dichtungsmuffe, aufweisend die Schritte:
- Bereitstellen eines Satzes von Elementen gemäss Anspruch 11;
- Einsetzen der Dichtung (2) in den Hülsenbereich (12) des Hülsenelement (1), wobei die Dichtung (2) durch den Einsatzbereich (14) hindurch in den Dichtungsbereich (13) eingesetzt wird;
- Einsetzen des Einsatzes (3) in den Einsatzbereich (14) des Hülsenbereiches (12), wobei das mindestens eine Einrastelement (36) in der mindestens einen Einrastöffnung (16) am Hülsenelement (1) einrastet.

## Claims

1. A **sealing sleeve** for the sealed connecting to at least one installation pipe (4), comprising:
- a sleeve element (1) with a pipe region (11) and with a sleeve region (12), wherein the sleeve region (12) comprise a sealing region (13) and an insert region (14);
- an elastic seal (2) for creating a sealed connection to at least one installation pipe (4), wherein the seal (2) is insertable into the sealing region (13) of the sleeve element (1), and
- an insert (3) with at least one first connection element (36) for latching the insert (3) into the sleeve element (1) and with at least one holding latch (35) for holding an installation pipe (4), wherein the insert (3) is insertable into the insert region (14) of the sleeve element (1),
wherein the sealing region (13) is arranged between the pipe region (11) and the insert region (14),
wherein the sleeve element (1) in the insert region (14) comprises at least one second connection element (16), into which at least one first connection element (36) of the insert is latchable, and
wherein the sleeve element (1) in the insert region (14) comprises at least one holding opening (15) which is different to the at least one second connection element (16), wherein the holding opening (15) is dimensioned and positionable such that the holding latch (35) is accessible via the holding opening (15).

2. The sealing sleeve according to claim 1, wherein the at least one first connection element (36) on the insert is designed as a latching element and the at least one second connection element (16) as a latching opening.

3. The sealing sleeve according to one of the claims 1-2, wherein the sleeve element (1) in the pipe region (11) comprises at least one holding latch (18) for holding an installation pipe (4).

4. The sealing sleeve according to one of the claims 1-3, wherein the seal (2) comprise a pipe stop (22).

5. The sealing sleeve according to one of the claims 1-4, wherein the seal (2) comprises an inner cone (21).

6. The sealing sleeve according to one of the claims 1-5, wherein an inner diameter of the sleeve region (12) corresponds to the outer diameter of the seal (2).

7. The sealing sleeve according to one of the claims 1-6, wherein an inner diameter of the sealing region (13) corresponds to the outer diameter of the insert (3).

8. The sealing sleeve according to one of the claims 1-7, wherein the at least one holding opening (15) is arranged closer towards the sealing region (13) than the at least one latching opening (16) for the latching in the insert (3).

9. The sealing sleeve according to one of the claims 1-8, wherein at least one holding rib (17) is arranged on the inner side of the sleeve region in the sealing region (13), said holding rib engaging at least against an outwardly projecting sealing rib (27) on the seal (2) and limiting a displacement of the seal (2) in the axial direction.

10. The sealing sleeve according to one of the claims 1-9, wherein markings (19) are arranged on the outer side of the sealing sleeve, said markings displaying an insertion depth, to which an installation pipe (4) is to be pushed into the sealing sleeve.

11. A set of elements for manufacturing a sealing sleeve, wherein the set comprises the following elements:
- a sleeve element (1) with a pipe region (11) and with a sleeve region (12), wherein the sleeve region (12) comprise a sealing region (13) and an insert region (14);
- an elastic seal (2) for creating a sealed connection to at least one installation pipe (4), wherein the seal (2) is insertable into the sealing region (13) of the sleeve element (1), and
- an insert (3) with at least one first latching element (36) for latching the insert (3) into the sleeve element (1) and with at least one holding latch (35) for holding the installation pipe (4), wherein the insert (3) is insertable into the insert region (14) of the sleeve element (1),
wherein the sealing region (13) is arranged between the pipe region (11) and the insert region (14),
wherein the sleeve element (1) in the insert region (14) comprises at least one latching opening (16), into which one of the at least one latching elements (36) of the insert is latchable, and
wherein the sleeve element (1) in the insert region (14) comprises at least one holding opening (15) which is different to the insert element (16), wherein the holding opening (15) is dimensioned and positionable such that the holding latch (35) is accessible via the holding opening (15) in the latched-in state of the insert in the sleeve element.

12. A **method** for manufacturing a sealing sleeve, comprising the steps:
- providing a set of elements according to claim 11;
- inserting the seal (2) into the sleeve region (12) of the sleeve element (1), wherein the seal (2) is inserted through the insert region (14) into the sealing region (13);
- inserting the insert (3) into the insert region (14) of the sleeve region (12), wherein the at least one latching element (36) latches in the at least one latching opening (16) on the sleeve element (1).

## Revendications

1. Manchon d'étanchéité destiné à être relié hermétiquement à un ou plusieurs tubes d'installation (4) et présentant :
- un élément (1) en douille doté d'une partie tubulaire (11) et d'une partie en douille (12), la partie en douille (12) présentant une partie (13) assurant l'étanchéité et une partie d'insertion (14),
- un joint élastique (2) destiné à établir une liaison étanche avec un ou plusieurs tubes d'installation (4), le joint (2) pouvant être inséré dans la partie (13) assurant l'étanchéité de l'élément (1) en douille et
- une garniture (3) présentant un ou plusieurs premiers éléments de liaison (36) qui permettent d'encliqueter la garniture (3) dans l'élément (1) en douille et une ou plusieurs arêtes de retenue (35) destinées à retenir un tube d'installation (4), la garniture (3) pouvant être insérée dans la partie d'insertion (14) de l'élément (1) en douille,
la partie (13) assurant l'étanchéité étant disposée entre la partie tubulaire (11) et la partie d'insertion (14),
l'élément (1) en douille présentant dans la partie d'insertion (14) un ou plusieurs deuxièmes éléments de liaison (16) dans lesquels un ou plusieurs premiers éléments de liaison (36) de la garniture peuvent s'encliqueter et
l'élément (1) en douille présentant dans la partie d'insertion (14) une ou plusieurs ouvertures de retenue (15) différentes du ou des deuxièmes éléments de liaison (16), la ou les ouvertures de retenue (15) étant dimensionnées et pouvant être positionnées de telle sorte que la ou les arêtes de retenue (35) soient accessibles par l'intermédiaire de la ou des ouvertures de retenue (15).

2. Manchon d'étanchéité selon la revendication 1, dans lequel le ou les premiers éléments de liaison (36) prévus sur la garniture sont configurés comme éléments d'encliquetage et le ou les deuxièmes éléments de liaison (16) sont configurés comme ouvertures d'encliquetage.

3. Manchon d'étanchéité selon l'une des revendications 1 et 2, dans lequel l'élément (1) en douille présente dans la partie tubulaire (11) un ou plusieurs cliquets de retenue (18) destinés à retenir un tube d'installation (4).

4. Manchon d'étanchéité selon l'une des revendications 1 à 3, dans lequel le joint (2) présente une butée tubulaire (22).

5. Manchon d'étanchéité selon l'une des revendications 1 à 4, dans lequel le joint (2) présente un cône intérieur (21).

6. Manchon d'étanchéité selon l'une des revendications 1 à 5, dans lequel un diamètre intérieur de la partie en douille (12) correspond au diamètre extérieur du joint (2).

7. Manchon d'étanchéité selon l'une des revendications 1 à 6, dans lequel un diamètre intérieur de la partie (13) assurant l'étanchéité correspond au diamètre extérieur de la garniture (3).

8. Manchon d'étanchéité selon l'une des revendications 1 à 7, dans lequel la ou les ouvertures de retenue (15) sont disposées plus près de la partie (13) assurant l'étanchéité que la ou les ouvertures d'encliquetage (16) permettant d'encliqueter la garniture (3).

9. Manchon d'étanchéité selon l'une des revendications 1 à 8, dans lequel au moins une nervure de retenue (17) qui engage le joint (2) au moins par une nervure d'étanchéité (27) et qui limite dans la direction axiale le déplacement du joint (2) est disposée dans la partie (13) assurant l'étanchéité sur le côté intérieur de la partie en douille.

10. Manchon d'étanchéité selon l'une des revendications 1 à 9, dans lequel des repères (19) qui indiquent une profondeur jusqu'à laquelle un tube d'installation (4) doit être inséré dans le manchon d'étanchéité sont disposés sur le côté extérieur du manchon d'étanchéité.

11. Kit permettant de réaliser un manchon d'étanchéité, le kit présentant les éléments suivants :
- un élément (1) en douille doté d'une partie tubulaire (11) et d'une partie en douille (12), la partie en douille (12) présentant une partie (13) assurant l'étanchéité et une partie d'insertion (14),
- un joint élastique (2) destiné à établir une liaison étanche avec un ou plusieurs tubes d'installation (4), le joint (2) pouvant être inséré dans la partie (13) assurant l'étanchéité de l'élément (1) en douille et
- une garniture (3) présentant un ou plusieurs premiers éléments de liaison (36) qui permettent d'encliqueter la garniture (3) dans élément (1) en douille et une ou plusieurs arêtes de retenue (35) destinées à retenir un tubes d'installation (4), la garniture (3) pouvant être insérée dans la partie d'insertion (14) de l'élément (1) en douille,
la partie (13) assurant l'étanchéité étant disposée entre la partie tubulaire (11) et la partie d'insertion (14),
l'élément (1) en douille présentant dans la partie d'insertion (14) une ou plusieurs ouvertures d'encliquetage (16) dans lesquelles au moins un des éléments de liaison (36) de la garniture peut s'encliqueter et
l'élément (1) en douille présentant dans la partie d'insertion (14) une ou plusieurs ouvertures de retenue (15) différentes du ou des éléments de liaison (16), la ou les ouvertures de retenue (15) étant dimensionnées et pouvant être positionnées de telle sorte que la ou les arêtes de retenu (35) soient accessibles par l'intermédiaire de la ou des ouvertures de retenue (15) lorsque la garniture a été insérée dans l'élément en douille.

12. Procédé de fabrication d'un manchon d'étanchéité, la procédé présentant les étapes qui consistent à :
- prévoir un kit selon la revendication 11,
- insérer le joint (2) dans la partie en douille (12) de l'élément (1) en douille, le joint (2) étant inséré dans la partie (13) assurant l'étanchéité à travers la partie d'insertion (14),
- insérer la garniture (3) dans la partie d'insertion (14) de la partie en douille (12), le ou les éléments d'encliquetage (36) s'encliquetant dans la ou les ouvertures d'encliquetage (16) prévues sur élément (1) en douille.
